Europäisches Patentamt

European Patent Office

Office européen des brevets

(11) Publication number: **0 226 356**
**A1**

# EUROPEAN PATENT APPLICATION

(21) Application number: **86309201.1**

(22) Date of filing: **25.11.86**

(51) Int. Cl.⁴: **H 02 K 23/56**
**H 02 K 3/04**

(30) Priority: **28.11.85 GB 8529343**
**07.06.86 GB 8613919**

(43) Date of publication of application:
**24.06.87 Bulletin 87/26**

(84) Designated Contracting States:
**DE ES GB IT**

(71) Applicant: Johnson Electric Industrial Manufactory Limited
Johnson Building 14-16 Lee Chung Street
Chaiwan(HK)

(72) Inventor: Oatham, Robert John
127 Highfields Caldecote
Cambridge CB3 7NX(GB)

(72) Inventor: Baines, Roger Frederick
121C Repulse Bay Road
Repulse Bay(HK)

(74) Representative: Higgins, Michael Roger et al,
MARKS & CLERK 57/60 Lincoln's Inn Fields
London WC2A 3LS(GB)

(54) Electric motor with ironless armature.

(57) An ironless armature assembly in a permanent magnet direct current motor 1 comprises a commutator assembly 8 mounted fast on a motor shaft 7 and supporting armature coils 9. The armature coils 9 are formed from a parallelogram shaped array 21 of strip conductors 22 which are folded about a line 29 at an acute angle to their length direction so that connecting portions 23, 27 at opposite ends of different conductors a, u face one another, and rolled into a cylinder about an axis perpendicular to the line 29. The portions 23, 27 are welded or soldered together to form a continuous coil, each strip 22 extending helically 360 degrees around the cylinder. Commutator segments 25 are integrally formed on ends of some of the strips and are folded onto a commutator base 16.

FIGURE 1

FIGURE 2

EP 0 226 356 A1

# ELECTRIC MOTOR WITH IRONLESS ARMATURE

## INTRODUCTION

The present invention relates to an electric motor having an ironless armature, and in particular to the provision of a novel construction of armature and a method of manufacture thereof.

Ironless armatures for low voltage DC motors have been made by winding electrically conductive wire onto a former to form a basket winding having many layers of wire winding. Machinery used to produce such windings is necessarily complicated and expensive.

## SUMMARY OF THE INVENTION

According to a first aspect of the invention there is provided a DC electric motor having an armature comprising a shaft of the motor and armature coils mounted on the shaft, wherein the armature coils comprise a plurality of electrically conducting strips each folded between its ends and extending to and fro in the axial direction and circumferentially about the shaft, each end of a conductor strip being electrically connected to a respective end of another conductor strip.

At least some of the conductor strip ends may be electrically connected to segments of a commutator. Preferably the segments are integrally formed on ends of respective strips.

The coils may be supported on a disc, or radially extending web, which may have a cylindrical extension forming a base for a commutator.

In a preferred embodiment the conductor strips are supported on a sheet of insulating material. The conductor strips preferably form a cylinder open at one end to receive a stationary iron core or magnet means forming the motor stator and supported at the other end on the motor shaft.

Another aspect of the invention provides a method of making an ironless armature for an electric motor, the method comprising forming an array of generally parallel conductor strips, folding the array transverse to the length direction of the strips and at an acute angle thereto, forming the folded array into a cylinder with the ends of the strips at one end thereof and electrically connecting the ends to form armature coils.

The conductor strips may be formed in a sheet which is folded about a line transverse to the length of the strips to bring opposite ends of the strips into line, the folded sheet is then rolled into a cylinder, the ends of different conductors overlapping and being connected one to another to form the winding. The strips may be folded about a sheet of insulating material which insulates between the overlapping strips and also forms a support for the rolled cylinder. An air gap may be provided between the circumferentially adjacent strips to prevent shorting therebetween.

In a particularly preferred form the conductor strips are of oxidisable metal, the conductor strips having a non-conducting oxidised surface to insulate between the overlapping strips. Very preferably the strips are of anodised aluminium. Portions of each strip may be masked during anodising to facilitate electrical connection if it is made after anodising.

Very preferably the armature coils are formed from an array of rectilinear parallel conductor strips which form a parallelogram shape. The array is folded midway along the strips, parallel to the line of their ends and then rolled into a cylinder. The angle of the parallelogram is preferably chosen to bring a first end

- 4 -

of each strip into facing contact with a second end of an adjacent strip, each conductor extending for 360 degrees around the circumference of the cylinder (180 degrees on the outer surface and 180 degrees on the inner surface) plus or minus the array spacing. This will form a two pole winding.

Preferably some of the conductors each have a commutator segment integrally formed at one end; after the array is folded and rolled the segments may be folded onto a commutator base. Preferably however, the base is formed by insert moulding the base in position after folding the segments into the required orientation. When using the insert moulding technique the plastics material may be caused to flash or flow over the inner and/or outer cylindrical surface of the formed coils.

Other preferred features and advantages of the invention will be apparent from the following description and the accompanying claims.

BRIEF DESCRIPTION OF THE DRAWINGS

Figure 1 is a cross-section through a fractional horse power permanent magnet direct current (PMDC) motor embodying the invention;

Figure 2a shows a blank for forming an ironless armature according to the invention;

Figure 2b shows the blank of figure 2a folded before rolling;

Figure 2c shows the blank of figure 2b with strip connecting portions cropped therefrom;

Figure 2d is a schematic cross-section through the blank of Figure 2c after rolling and folding commutator segments thereof.

Figure 2e is an end view of the rolled blank of Figure 2d, with a commutator base moulded in position;

Figure 2f is cross-section on the line II-II Figure 2e; and

Figure 3 shows a modification of a commutator base of the armature of Figure 1.

DESCRIPTION OF THE PREFERRED EMBODIMENT

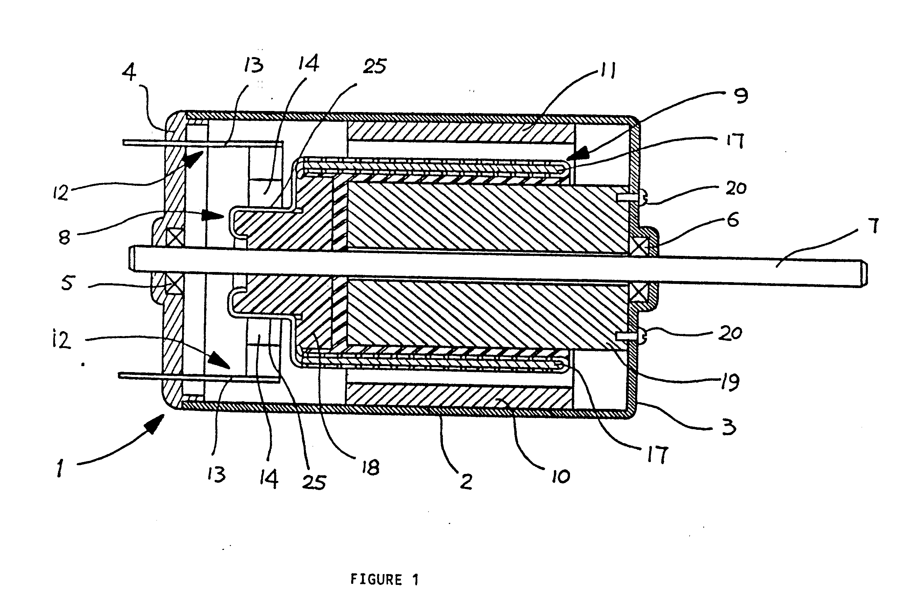

Figure 1 shows a fractional horsepower PMDC motor 1 utilising an ironless armature. The motor 1 comprises a steel outer casing 2 closed at one end 3 and having a plastics end cap 4 mounted at its open end. The end cap and casing carry bearings 5, 6 in which is journalled a motor shaft 7. Mounted fast on the shaft 7 is a commutator 8 and armature coils 9, the shaft, commutator and coils forming an armature assembly.

Two permanent magnets 10, 11 are mounted in the casing 2 around the armature coils 9. The magnets are mounted in a manner generally known in the art. Brush gear 12 comprising a pair of brush leaves 13 and brushes 14 is mounted in the end cap 4, the brushes 14 bearing on segments 25 of the commutator 8.

Such end cap and brush gear assemblies are well known in the art and need not be described in detail here.

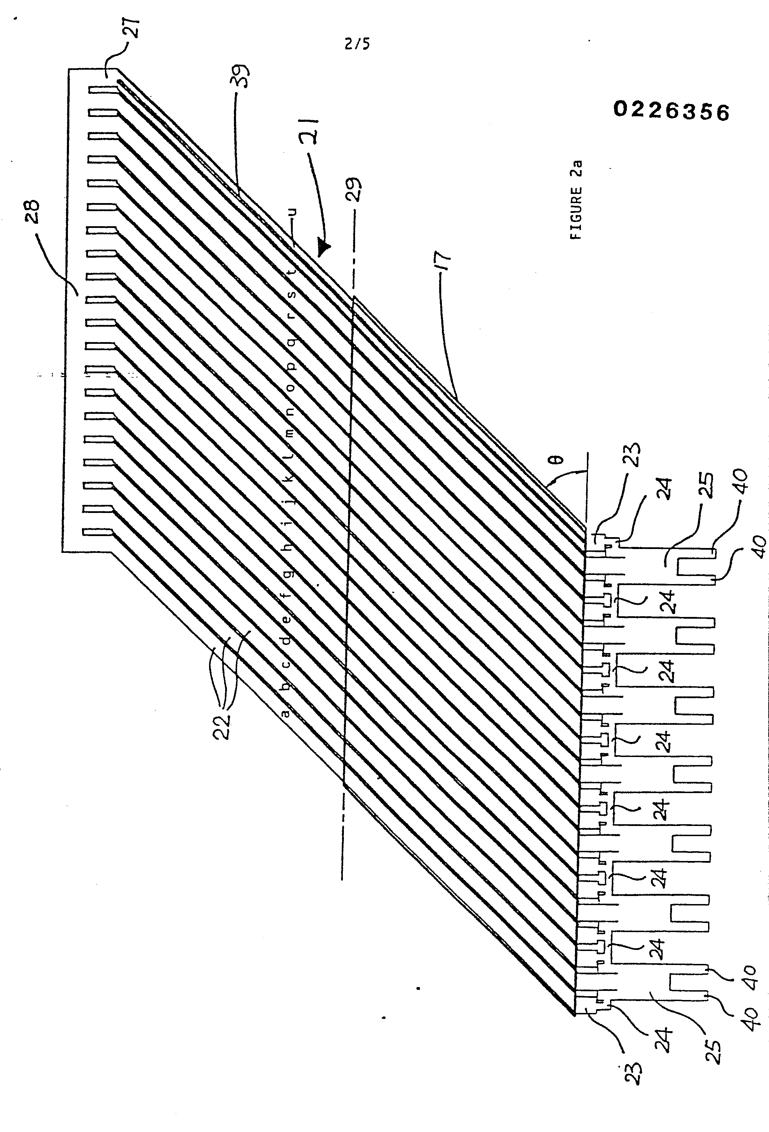

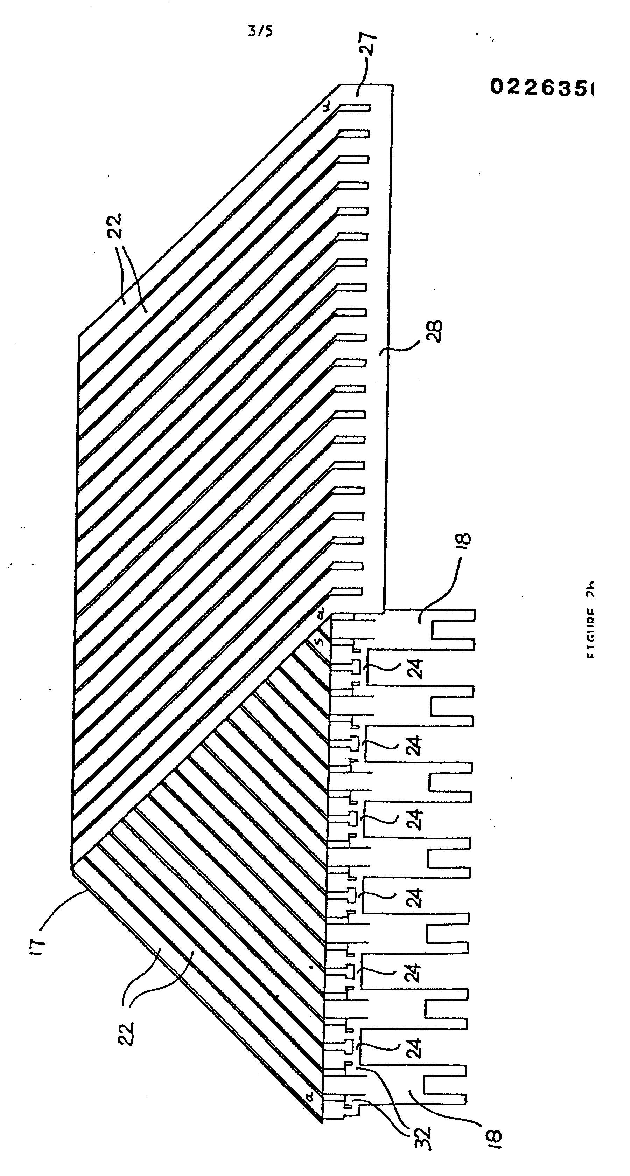

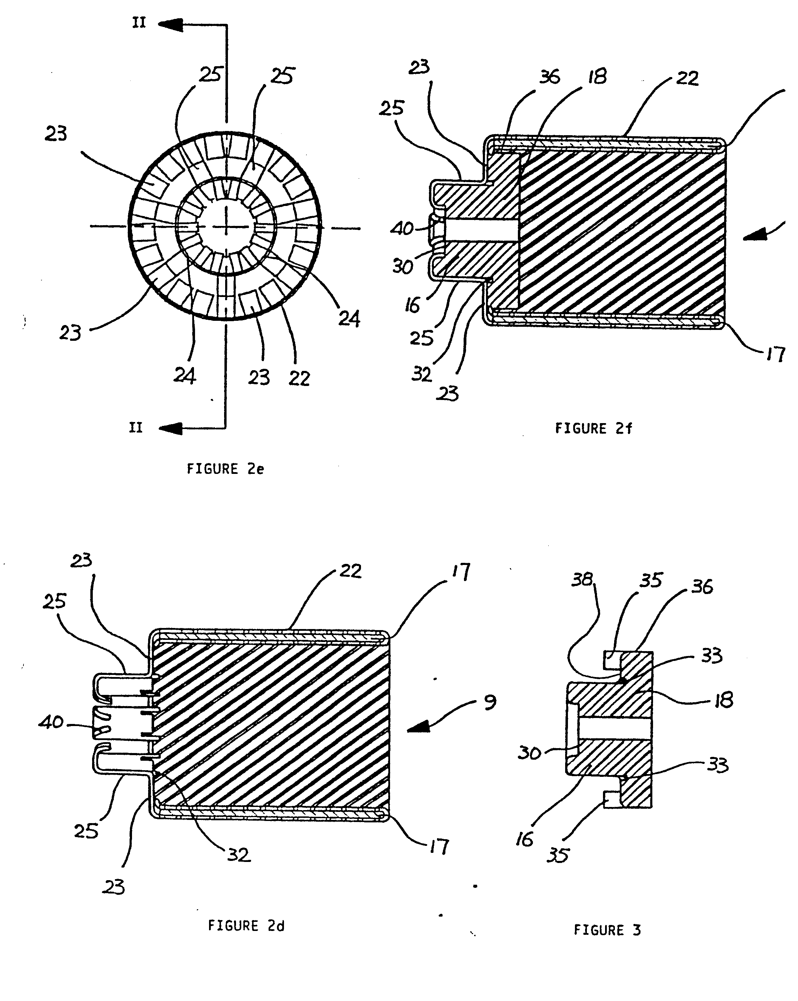

Referring in more detail to the armature assembly, which incorporates the invention, the assembly comprises a first cylindrical plastics base 16 which is mounted fast on the shaft 7 to rotate therewith and forms a base of commutator 8. A plastics disc 18 is integrally formed with base 16. A second, hollow cylindrical plastics sheet 17 has a larger internal diameter than first part 16 and is supported about the shaft 7 by the coils 9 which engage disc portion 18. Portion 17 supports and insulates between electrically conducting strips 22 forming the armature coil 9, as will be described in more detail with reference to figures 2a to 2f. A stationary cylindrical iron core 19 is attached by screws 20 to the end face 3 of casing 2 and projects into the annular space between the coil 9 and shaft 7, but is clear of both the coil 9 and shaft 7.

Figure 2a shows a blank 21 for forming the armature coils 9. Blank 21 is stamped from copper sheet and comprises a plurality of strips 22, which are of identical width and length. The strips 22 are labelled a to u to facilitate the description hereinafter. The strips are of equal length and form a parallelogram shape as seen in figure 2a. A longitudinally extending slit 39 may be formed in each strip, to avoid cross-flow currents in the strips. For clarity only one such slit is shown, in strip 22u. Connecting portions 23 are formed at first ends of the strips and project at an angle to the length direction of the strips, perpendicular to the respective edge 26 of the parallelogram shape. The portions 23 are connected by connecting strips 24 for ease of handling and commutator segments 25 are integrally formed on the end of each third strip, b, e, h etc. The opposite, second ends of the strips are provided similarly with connecting portions 27 which are connected by a strip 28.

The blank is folded about line 29 (Figure 2a) midway between the ends of the strips 22. The angle θ of the parallelogram is such that the end portion 27 of strip a overlaps the end portion 23 of strip u, so that an electrical connection can be formed between the strips a and u. The blank is folded about a plastics sheet 17.

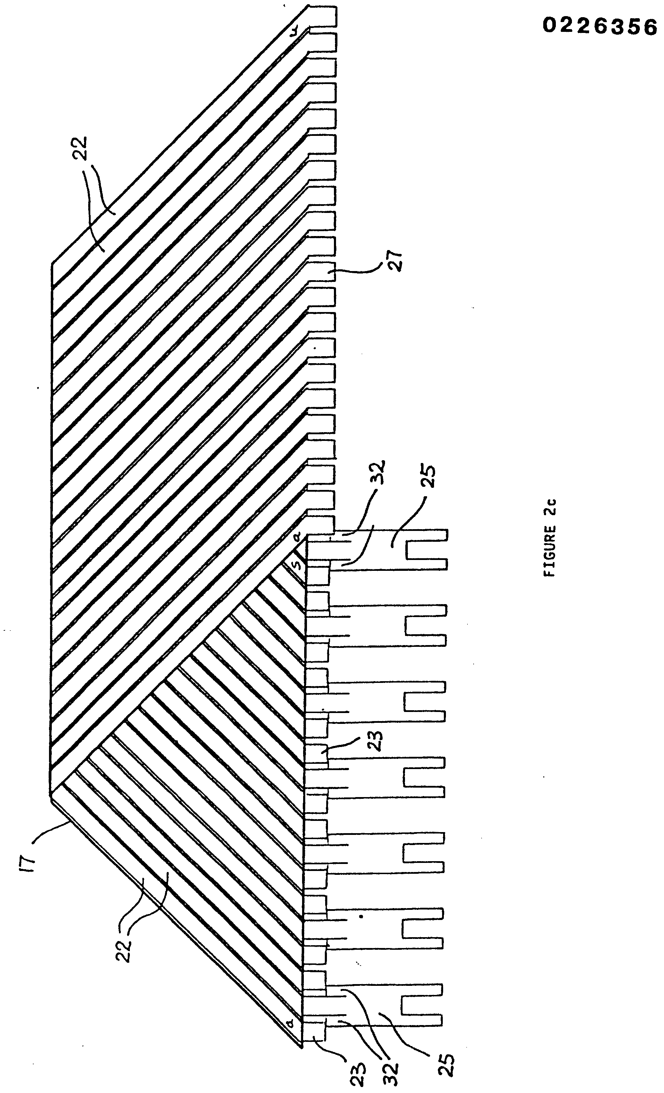

After folding, the strips 24, 28 are cut from the blank (Figure 2c) and the blank then rolled about an axis perpendicular to the fold line 29 to form a cylinder whose circumference is equal to the width of the array along line 29. The blank is rolled so that the ends 27 are on the inside of the cylinder. The strips 22 are tapered slightly towards the ends 27 as the inner circumference of the formed cylinder will be less than the outer circumference. After rolling the terminal 23 of strip a will face terminal 27 of strip b and so on with terminal 23 of strip t facing terminal 27 of strip u. The facing terminals 23, 27 are soldered or welded together to form the strips into a continuous conducting loop, formed by turns which each helically extend 360 degrees less a conductor width around the formed cylinder, extending 180 degrees on the inner surface and 180 degrees on the outer surface.

The joined terminals 23, 27 and the associated segments 25 are bent radially inwardly with further bends being made in the commutator segments 25 (Figure 2d) to form tabs 32, 40 for engaging commutator base 16. The commutator base 16 and disc 18 are formed by insert moulding. This technique is well known in the art and briefly comprises supporting the folded and rolled coils in a moulding tool and then injection moulding the plastics base in position. Tabs 40 of the segments 25 are positioned in a recess 30 in the end of the commutator base 16 and tabs 32 are received in recesses 33 between the base 16 and collar 18 (Figure 2f). Tabs 32 are also formed on the segments 25 when stamping the blank, the tabs being connected in the original blank (Figure 2a) by connecting strips 24 but being freed when these portions are cut from the blank. The coil is supported by the end face 38 and outer circumferential surface 36 of disc 18.

For dynamic reasons it may be preferable to omit sheet

0226356

- 10 -

17 to allow the conductors to flex outwardly during rotation of the armature. In this construction it may be particularly preferable to form the conductors 22 from anodised aluminium, the aluminium oxide layer is very tough and expected to provide good insulation between the conductor strips even in conditions where the strips may rub against one another during flexing.

In another embodiment, Figure 3, the collar 18 on the commutator base has a plurality of radially extending fan blades 35. These project between the connection portions 23, 27 and form a centrifugal fan for providing a cooling air stream in the vicinity of the commutator. For clarity, only the base 16 and disc 18 are shown in Figure 3.

Other coil configurations may be adopted. The configuration shown in Figure 2a to 2f is a two pole winding. To form a 4 pole winding for example the angle $\theta$ of the parallelogram seen in Figure 2a is increased so that strip $\underline{a}$ will fold over onto strip $\underline{k}$.

Each strip may, as indicated, extend for 360 degrees or 180 degrees for a four pole winding, plus the conductor spacing.

- 11 -

The number and cross-sectional size of the strips 22, and the number of commutator segments 25 may be varied to provide different coil characteristics. Also the commutator segments may lay on the face of disc 18 with the brushes 14 bearing on the face. Such face commutators are well known in the art.

It is desired to include all such modifications as fall within the scope of the accompanying claims.

CLAIMS

1. A DC electric motor having an armature comprising a shaft (7) of the motor, and armature coils (9) mounted on the shaft (7), wherein the armature coils (9) comprise a plurality of electrically conducting strips (22) each folded between its ends and extending to and fro in the axial direction of and circumferentially about the shaft (7), each end (23, 27) of a conductor strip (22) being electrically connected to a respective end (27, 23) of another conductor strip (22).

2. A motor as claimed in claim 1, wherein the conductor strips (22) form a hollow cylinder about the shaft (7), a stationary iron core (19) is positioned within the annular space between the cylinder and the shaft (7) and magnet means (10, 11) forming a stator of the motor are positioned outside of the cylinder.

3. A motor as claimed in claim 1, wherein the conductor strips (22) form a hollow cylinder about the shaft, stationary magnet means forming the motor stator are positioned within the annular space between the cylinder and the shaft (7), and an iron sleeve is positioned outside of the cylinder.

4. A motor as claimed in claim 1, 2 or 3, wherein commutator segments (25) are integrally formed each on an end of a respective conductor strip (22).

5. A motor as claimed in any one of claims 1 to 4, wherein the conductor strips (22) are of anodised aluminium.

6. A motor as claimed in any one of claims 1 to 5, wherein the conductor strips (22) form a hollow cylinder about the shaft (7), the cylinder is supported at one end on a collar (18) mounted on the shaft (7) and a plurality of radially extending fan blades (35) are provided on the collar (18).

7. A motor as claimed in anyone of claims 1 to 6, wherein a conductor (22) has a longitudinally extending slit (39).

8. A method of making an ironless armature for an electric motor, comprising forming an array (21) of generally parallel conductor strips (22), folding the array (21) transverse to the length direction of the strips and at an acute angle thereto, forming the folded array into a cylinder with the ends (23, 27) of the strips at one end thereof, and electrically connecting the ends to form armature coils.

9. A method as claimed in claim 8, wherein the array is a parallelogram shape and the conductor strips are rectilinear, the array being folded to bring opposite ends of the strips into line, and then rolled to bring together the ends to be joined.

10. A method as claimed in claim 8 or 9, wherein a metal blank is formed, the strips being connected to each other at their ends (23, 27) by connecting portions (24, 28) which are cut from the blank after folding.

11. A method as claimed in claim 10, wherein commutator segments (25) are provided on ends of at least some of the strips (22) when the blank is formed, the segments (25) being folded and supported by a commutator base (16) after the array is formed into a cylinder.

12. A method as claimed in anyone of claims 8 to 11, wherein a flexible support is positioned in the fold of the strips before the cylinder is formed.

FIGURE 1

a b c d e f g h i j k l m n o p q r s t u

θ

FIGURE 2a

28
27
22
39
21
29
17
23
24
25
40 40
23
24
25
40
24 24 24 24 24 24 24
40

2/5

0226356

FIGURE 2b

FIGURE 2c

0226356

FIGURE 2e

FIGURE 2f

FIGURE 2d

FIGURE 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 545 777 (EDGAR)<br><br>* Whole document *<br><br>--- | 1-4,8,<br>11,12 | H 02 K  23/56<br>H 02 K   3/04 |
| A | PATENTS ABSTRACTS OF JAPAN, vol. 7, no. 17 (E-154)[1162], 22nd January 1983; & JP-A-57 173 340 (TOKYO SHIBAURA DENKI K.K.) 25-10-1982<br>* Whole document *<br><br>--- | 1,8,9,<br>12 | |
| A | PATENTS ABSTRACTS OF JAPAN, vol. 8, no. 161 (E-257)[1598], 26h July 1984; & JP-A-59 61 452 (MATSUSHITA DENKO K.K.) 07-04-1984<br>* Whole document *<br><br>--- | 10 | |
| P,A | PATENTS ABSTRACTS OF JAPAN, vol. 10, no. 113 (E-399)[2170], 26th April 1986; & JP-A-60 249 854 (MATSUSHITA DENKO K.K.) 10-12-1985<br>* Whole document *<br><br>----- | 10 | **TECHNICAL FIELDS SEARCHED (Int Cl 4)**<br><br>H 02 K  23/00<br>H 02 K   3/00 |

The present search report has been drawn up for all claims

| Place of search | Date of completion of the search | Examiner |
|---|---|---|
| THE HAGUE | 13-02-1987 | LE GUAY P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82